# EUROPÄISCHE PATENTSCHRIFT

(11) **EP 2 101 084 B1**
(45) Veröffentlichungstag und Bekanntmachung des Hinweises auf die Patenterteilung: **11.05.2011**
(21) Anmeldenummer: 09003507.2
(22) Anmeldetag: 11.03.2009
(51) Int. Cl.: F16H 47/08, F16H 61/21, B60T 10/02, F16D 57/04

(54) **Verfahren zum Bremsen bei hohen Drehzahlen mit einem Automatgetriebe mit hydrodynamischem Wandler**
Method for braking at high RPM with an automatic drive with hydrodynamic convertor
Procédé de freinage à vitesses élevées à l'aide d'une boîte de vitesse automatique dotée d'un convertisseur hydrodynamique

(30) Priorität: 15.03.2008 DE 102008014563
(43) Veröffentlichungstag der Anmeldung: 16.09.2009
(73) Patentinhaber: Voith Patent GmbH, 89522 Heidenheim (DE)
(72) Erfinder: Maier, Wilfried, 89518 Heidenheim (DE); Busch, Jörg, Dr., 89551 Königsbronn-Zang (DE); Vogel, Hans, 89518 Heidenheim (DE)
(74) Vertreter: Dr. Weitzel & Partner

(56) Entgegenhaltungen:
- DE-A1- 3 627 370
- FR-A- 1 325 887
- US-A- 4 077 502
- US-A- 5 213 551

## Beschreibung

Die Erfindung betrifft ein Verfahren zum Bremsen mit einem Automatgetriebe mit hydrodynamischem Wandler bei hohen Abtriebsdrehzahlen, wobei zum Bremsen der Abtrieb des Automatgetriebes mit der Turbinenwelle des hydrodynamischen Wandlers gekoppelt wird.

Gattungsgemäße Automatgetriebe sind allgemein bekannt. Beispielhaft soll hier auf die DE 20 21 543 A1 verwiesen werden, welche ein kombiniert hydrodynamisch - mechanisches Getriebe für Fahrzeuge mit Teilung der Traktionsleistung mittels eines Differentialgetriebes auf einen Kraftweg mit einem hydrodynamischen Wandler und einen parallel dazu liegenden mechanischen Kraftweg und mit einer Zusammenführung der Traktionsleistung auf einen gemeinsamen Kraftweg beschreibt. Dabei weist das Getriebe mechanische, wahlweise ein- und ausschaltbaren Übersetzungsstufen (Gänge) im hydraulischen und/oder mechanischen und/oder im gemeinsamen Kraftweg auf.

Der hydrodynamische Wandler in derartigen Getrieben kann außerdem als Retarder bzw. verschleißfreie Dauerbremse genutzt werden, wenn durch eine entsprechende Kopplung der Übersetzungen bzw. Planetengetriebe in dem Automatgetriebe eine Einleitung von Kraft vom Abtrieb des Getriebes in den hydrodynamischen Wandler erzielt wird. Bei den heute typischen Anwendungen für ein derartiges Bremsen wird das Automatgetriebe dazu in die Kopplungsstruktur des Rückwärtsgangs gebracht, so dass vom Abtrieb Leistung in den hydrodynamischen Wandler eingeleitet wird. Beispielhaft hierzu soll auf die DE 36 27 370 A1 verwiesen werden. Aufgrund der hohen Übersetzungen zwischen dem Abtrieb und der Turbine kann so über nahezu den gesamten Geschwindigkeitsbereich hinweg mit dem Wandler gebremst werden. Das Bremsen erfolgt dabei durch den Wandler, typischerweise einen Gegenlaufwandler, selbst und nicht etwa durch den Schubbetrieb, also das Schleppen der Verbrennungskraftmaschine.

Allerdings ist es hierbei von großem Nachteil, dass sich bei hohen Geschwindigkeiten, also bei hohen Abtriebsdrehzahlen, wie sie beispielsweise im dritten oder vierten Gang auftreten, extrem hohe Drehzahlen im Bereich der Turbine und des Hohlrads des Turbinengetriebes ergeben. Beim Einschalten der Wandlerbremse müssen diese extrem hohen Drehzahlen dabei typischerweise in einer sehr kurzen Zeitspanne - im Allgemeinen weniger als eine Sekunde - erreicht werden. Aufgrund der dabei entstehenden extrem hohen Beschleunigungen kommt es zu sehr großen Belastungen der Bauteile und insbesondere der Lager.

Bei entsprechend hohen Abtriebsdrehzahlen kann außerdem die theoretisch mögliche sehr hohe Bremsleistung nicht voll ausgenutzt werden, da dies zu einer sehr starken thermischen Belastung der Wandlerbremse führen würde. Die theoretisch mögliche Bremsleistung des hydrodynamischen Wandlers muss für diese Betriebszustände daher deutlich reduziert werden.

Ferner ist aus der FR-A- 1 325 887 ein Automatgetriebe mit einem Wandler und einem Turbinengetriebe bekannt. Auch hier ist es möglich den Wandler sowohl als Wandler als auch als Bremse zu verwenden. Zum Bremsen wird dabei ein Abtrieb über eine Sonne des Turbinengetriebes mit dem Wandler verbunden. Der Aufbau erfordert zusätzlich zur oben genannten Schrift Freiläufe, welche ihn aufwändig, schwer, groß und teuer machen.

Es ist nun die Aufgabe der Erfindung, diese oben genannten Nachteile zu vermeiden und ein Verfahren zum Bremsen bei hohen Abtriebsdrehzahlen anzugeben.

Erfindungsgemäß wird diese Aufgabe dadurch gelöst, dass das Hohlrad des Turbinengetriebes bei geöffneter Lamellenbremse des Hohlrads des Rückwärtsgangs gebremst und gleichzeitig der Steg des Turbinengetriebes mit dem Abtrieb verbunden wird. Durch diese Aktivierung des hydrodynamischen Wandlers bzw. der Wandlerbremse über ein Bremsen des Hohlrads des Turbinengetriebes wird eine Krafteinleitung in die Turbine durch die Verbindung mit dem Abtrieb erreicht. Entgegen dem Bremsen beim Stand der Technik kommt es hier zu keiner Drehrichtungsumkehr, so dass die Turbine in der selben Drehrichtung läuft wie beim Fahren im ersten Gang. Die Bremsmomente in der Turbine sind aufgrund dieser entgegengesetzten Drehrichtung der Turbine und damit verbunden der entgegengesetzten Drehrichtung der Strömung in dem Wandler wesentlich geringer als beim Bremsen gemäß dem oben dargelegten Stand der Technik. Aufgrund der hohen Drehzahlen im Abtrieb des Automatgetriebes kann jedoch trotz der geringeren Bremsmomente eine ausreichend hohe Bremsleistung erzielt werden, welche gemäß der durchgeführten Messungen bei den hohen Drehzahlen beispielsweise des dritten und vierten Gangs, ein Bremsmoment am Abtrieb des Automatgetriebes liefert, welches immer noch über den benötigten Werten liegt.

Außerdem ist durch diese Art der Kopplung zwischen Abtrieb und Wandlerbremse die Übersetzung zwischen Abtrieb und Turbine wesentlich geringer. Damit fallen auch die Drehzahlen der Turbine trotz gleich hoher Abtriebsdrehzahlen sehr viel geringer aus.

Die besonderen Vorteile liegen nun darin, dass durch das Vermeiden dieser hohen Drehzahlen auch die Belastung der Lager und der Bauteile, insbesondere die Einschaltbeschleunigung, wesentlich reduziert werden kann. Dies ermöglicht eine leichtere Konstruktion derselben und/oder eine wesentlich längere Lebensdauer.

Ein weiterer Vorteil liegt darin, dass bei den niedrigen Drehzahlen die Emission von Geräuschen deutlich reduziert wird, und dass außerdem Bremsschwingungen praktisch ausgeschlossen sind. Aufgrund dieses Entfalls der Bremsschwingungen ergibt sich außerdem der Vorteil, dass die Turbine wesentlich freier optimiert werden kann. Diese freiere Optimierungsmöglichkeit für die Turbine erlaubt es, dass diese bezüglich Wandlung und Wirkungsgrad einerseits und bezüglich einer Verbesserung der Festigkeit andererseits verbessert werden kann.

Dadurch, dass nunmehr auch bei entsprechend hohen Abtriebsdrehzahlen noch gebremst werden kann, erlaubt die erfindungsgemäße Optimierung der Wandlerbremse außerdem eine Vergrößerung der Spreizung des Differenzialwandlergetriebes und ermöglicht so höhere Abtriebsdrehzahlen des Getriebes insgesamt.

Besonders bevorzugt ist der in dem Automatgetriebe eingesetzte Wandler dabei als Gegenlauf-Wandler ausgebildet.

In einer besonders günstigen und vorteilhaften Ausgestaltung der erfinderischen Idee, ist es vorgesehen, dass das erfindungsgemäße Verfahren bei hohen Abtriebsdrehzahlen eingesetzt wird, und dass unterhalb einer bestimmten Grenzdrehzahl die Lamellenbremse des Hohlrads des Rückwärtsgangs bei gleichzeitigem Öffnen der Lamellenbremse des Hohlrads der Turbine geschlossen wird.

Dies bedeutet, dass unterhalb einer bestimmten Grenzdrehzahl auf das Bremsen gemäß dem Stand der Technik umgeschaltet wird, die Turbine sich als andersherum dreht als beim Bremsen mit hohen Drehzahlen beziehungsweise beim Anfahren. Durch diese Kombination der beiden Bremsmethoden kann ein sehr effizientes Bremsen über alle Drehzahlbereiche hinweg erreicht werden. Im Bereich von niedrigeren Abtriebsdrehzahlen, beispielsweise im ersten oder zweiten Gang können über das herkömmliche Bremsen hohe Bremsmomente erreicht werden. Aufgrund der insgesamt niedrigeren Abtriebsdrehzahlen wird die Belastung der Bauteile des hydrodynamischen Wandlers sich dabei in Grenzen halten. Dennoch können hohe Bremsmomente und damit eine ausreichend hohe Bremsleistung trotz der niedrigeren Drehzahlen realisiert werden.

Beim Bremsen oberhalb einer vorgegebenen Abtriebsdrehzahl wird dann auf das neue erfindungsgemäße Verfahren gewechselt, so dass weiterhin eine ausreichende Bremsleistung sichergestellt werden kann, ohne jedoch eine extrem hohe Belastung des hydrodynamischen Wandlers und der weiteren leistungsübertragenden Teile in Kauf nehmen zu müssen.

Weitere vorteilhafte Ausgestaltungen des erfindungsgemäßen Verfahrens ergeben sich aus den restlichen Unteransprüchen und werden nachfolgend anhand eines Ausführungsbeispiels exemplarisch dargelegt.

Dabei zeigen:
- Figur 1: ein Differenzialwandlergetriebe mit einem Kraftfluss beim Bremsen gemäß dem Stand der Technik; und
- Figur 2: ein Differenzialwandlergetriebe mit dem Kraftfluss beim erfindungsgemäßen Verfahren zum Bremsen bei hohen Abtriebsdrehzahlen.

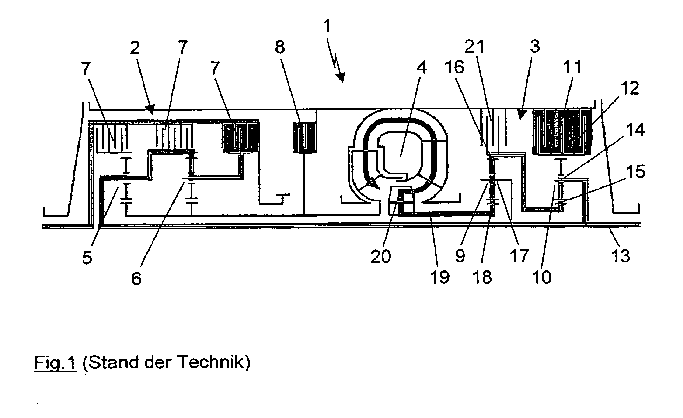

In Figur 1 ist ein herkömmliches Differenzialwandlergetriebe 1 als typisches Beispiel für ein gattungsgemäßes Automatgetriebe dargestellt. Grundsätzlich ist die Möglichkeit zum Bremsen bei hohen Abtriebsdrehzahlen jedoch nicht auf diese exemplarisch gewählte Bauform des Differenzialwandlergetriebes 1 eingeschränkt, sondern kann selbstverständlich auch bei anderen Bauformen mit variierenden Anzahlen von Planetengetrieben in einem Eingangsbereich 2 und/oder einem Ausgangsbereich 3 des Getriebes realisiert werden.

Das hier dargestellte exemplarische Differenzialwandlergetriebe 1 weist einen Eingangsbereich 2 und einen Ausgangsbereich 3 auf. Zwischen dem Eingangsbereich 2 und dem Ausgangsbereich ist der hydrodynamische Wandler 4 angeordnet, bei dieser Verschaltung in idealer Weise ein Gegenlauf-Wandler. Im hier dargestellten Ausführungsbeispiel weist der Eingangsbereich 2 dabei zwei Planetensätze 5, 6 sowie drei Lamellenkupplungen 7 und eine Pumpenbremse 8 auf. Der hier dargestellte Kraftfluss durch den Eingangsbereich 2 des Getriebes 1 entspricht dem des vierten Gangs, und damit einer hohen Abtriebsdrehzahl.

Im Abtriebsbereich 3 weist das exemplarische Differenzialwandlergetriebe 1 zwei weitere Planetensätze 9, 10 auf. Dabei handelt es sich um das so genannte Turbinengetriebe 9 und das Rückwärtsganggetriebe 10. Im hier dargestellten Kraftfluss wird nun eine Lamellenbremse 11 des Rückwärtsganggetriebes 10 geschlossen, so dass diese ein Hohlrad 12 des Rückwärtsganggetriebes 10 festhält. Ein Abtrieb 13 des Getriebes 1 ist dann über einen Steg 14 mit der Sonne 15 des Rückwärtsganggetriebes 10 verbunden. Die Sonne 15 steht wiederum in Verbindung mit einem Hohlrad 16 des Turbinengetriebes 9, welches ungebremst läuft und bei mit dem Abtrieb verbundenem Steg 17 über dessen Sonne 18 mit der Turbinenwelle 19 und damit der Turbine 20 des Wandlers 4 verbunden ist. In dieser Konstellation kommt es zu einer Einleitung des Abtriebsmoments in den Wandler 4, so dass der Wandler 4 als verschleißfreie Dauerbremse gemäß der eingangs beschriebenen Art und Weise genutzt wird. Bei diesem Bremsen gemäß dem Stand der Technik kommt es bei der hier dargestellten Konstellation mit der Kopplung des Eingangsbereichs 2 für den vierten Gang zu den angesprochenen Nachteilen aufgrund der extrem hohen Drehzahlen und Beschleunigungen in dem Wandler 4.

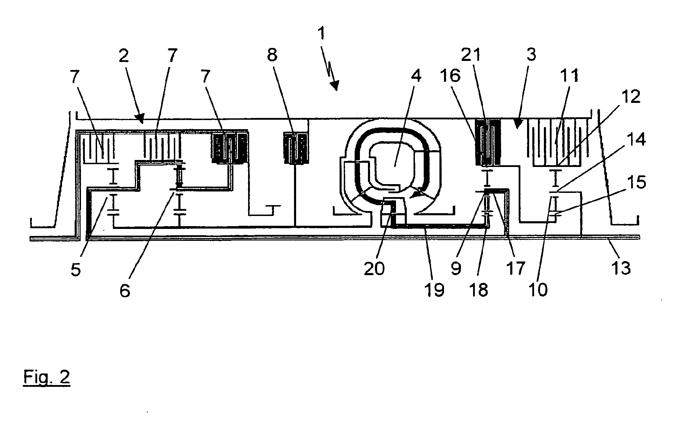

In Figur 2 ist nun das selbe exemplarische Getriebe 1 dargestellt, wobei hier der Kraftfluss für das optimierte Bremsen bei hohen Abtriebsdrehzahlen, hier im 4. Gang, gemäß der Erfindung eingezeichnet ist. Der grundlegende Aufbau des Getriebes ist derselbe, so dass auch die selben Elemente jeweils mit den selben Bezugszeichen versehen sind. Auch hier befindet sich der Eingangsbereich 2 des Getriebes 1 in der Kopplungsstruktur des vierten Gangs, so dass am Abtrieb 13 die entsprechend hohen Drehzahlen vorliegen. Entgegen dem Bremsen gemäß dem Stand der Technik ist das Hohlrad 12 des Rückwärtsganggetriebes mit der Lamellenbremse 11 hier nicht gebremst. Dadurch ist das Rückwärtsganggetriebe 10 nicht im Leistungsfluss gekoppelt. Vielmehr ist das Sonnenrad 15 des Rückwärtsganggetriebes 10 zusammen mit dem Hohlrad 16 des Turbinengetriebes 9 durch eine Lamellenbremse 21 gebremst. Vom Abtrieb 13 wird so Kraft über den Steg 17 und die Sonne 18 des Turbinengetriebes 9 auf die Turbinenwelle 19 und damit in die Turbine 20 des Wandlers 4 geleitet. Im Gegensatz zu der Krafteinleitung beim oben dargestellten Stand der Technik erfolgt diese Krafteinleitung in entgegengesetzter Richtung, also in der selben Drehrichtung der Turbine, wie beim Fahren mit dem Wandler 4 im 1. Gang. Die Turbine in dem Wandler 4 kann daher nur geringere Bremsmomente erzeugen als bei einer Drehung entgegen der auch zum Fahrantrieb durch die Turbine des Wandlers 4 genutzten Drehrichtung.

Durch die geöffnete Lamellenbremse des Rückwärtsgangs kann das Hohlrad 12 des Rückwärtsganggetriebes 10 dabei jetzt frei drehen. Aufgrund der Krafteinleitung über Steg 17 und Sonne 18 des Planetengetriebes 9 in die Turbine des Wandlers 4 ergibt sich außerdem eine wesentlich kleinere Übersetzung zwischen dem Abtrieb 13 und der Turbine 20 im Vergleich mit dem Stand der Technik (Figur 1). Damit wird auch eine deutlich geringere Drehzahl der Turbine in dem Wandler 4 auftreten. Zusammen mit den hohen Drehzahlen am Abtrieb 13 reichen jedoch auch die so erzielbaren eher geringen Bremsmomente aus, um die geforderte Bremsleistung zu realisieren. Außerdem ergeben sich durch die geringeren Drehzahlen geringere Kräfte und Beschleunigungen, insbesondere beim Einschalten, so dass eine höhere Lebensdauer von Bauteilen und Lagern erzielt werden kann. Zusätzlich werden Geräuschemissionen und Bremsschwingungen bei hohen Drehzahlen verringert oder können ganz vermieden werden. Auch dies wirkt sich vorteilhaft auf das Differenzialwandlergetriebe 1 aus, insbesondere kann durch den Entfall der Bremsschwingungen eine deutlich freiere Dimensionierung der Getriebebauteile und eine Vergrößerung der Spreizung der Übersetzungen des Differenzialwandlergetriebes 1 erreicht werden.

Besonders vorteilhaft ist es, wenn das Bremsverfahren gemäß dem Stand der Technik und das Bremsverfahren gemäß der Erfindung kombiniert wird. Dies könnte beispielsweise so erfolgen, dass unterhalb einer bestimmten Grenzdrehzahl jeweils das Bremsen gemäß dem Stand der Technik erfolgt. Beispielhaft könnten hier das Bremsen im ersten oder zweiten Gang genannt werden. Die Kopplungsstrukturen des Eingangsbereichs 2 des Differenzialwandlergetriebes 1 wären dafür andere als die hier dargestellten, diese sind jedoch allgemein bekannt und daher nicht explizit aufgeführt. Bei diesen Bremsen gemäß dem Stand der Technik könnten dann die bekannten Bremsleistungen bei den niedrigen Drehzahlen, beispielsweise des ersten und zweiten Gangs erreicht werden. Oberhalb einer bestimmten Grenzdrehzahl, beispielsweise im dritten und vierten Gang, wobei hier lediglich die Kopplungsstruktur des Eingangsbereichs 2 für den vierten Gang dargestellt ist, könnte dann das neue erfindungsgemäße Verfahren zum Bremsen zum Einsatz kommen.
Bei einer Bremsung aus höheren Geschwindigkeiten kann mit dem Bremsverfahren gemäß der Erfindung begonnen werden; sodann kann während des Verzögerns bei geringerer Geschwindigkeit auf das Bremsen gemäß dem Stand der Technik umgeschaltet werden.

Damit wären über dem gesamten Betriebsbereich und alle Abtriebsdrehzahlen hinweg, ausreichend hohe Bremsleistungen realisierbar, ohne die Nachteile beim Bremsen mit hohen Abtriebsdrehzahlen, welche eingangs genannt wurden, befürchten zu müssen.

## Patentansprüche

1. Verfahren zum Bremsen mit einem Automatgetriebe (1) mit hydrodynamischem Wandler (4), einem Turbinengetriebe (9) und einem Rückwärtsganggetriebe (10), wobei
1.1 der hydrodynamische Wandler als Strömungsbremse verwendet wird, wobei
1.2 zum Bremsen bei hohen Abtriebsdrehzahlen der Abtrieb (13) des Automatgetriebes mit der Turbinenwelle (19) des hydrodynamischen Wandlers gekoppelt wird,
**dadurch gekennzeichnet, dass**
1.3 ein Hohlrad (16) des Turbinengetriebes bei geöffneter Lammellenbremse (11) eines Hohlrads (12) des Rückwärtsganggetriebes (10) gebremst oder festgebremst wird, und gleichzeitig
1.4 ein Steg (17) des Turbinengetriebes (9) mit dem Abtrieb (13) verbundenen ist.

2. Verfahren nach Anspruch 1, **dadurch gekennzeichnet, dass** als hydrodynamischer Wandler ein Gegenlaufwandler eingesetzt wird.

3. Verfahren zum Bremsen nach einem der vorhergehenden Ansprüche, **dadurch gekennzeichnet, dass** unterhalb einer bestimmten Grenzdrehzahl die Lammellenbremse (11) für das Hohlrad (12) des Rückwärtsganggetriebes (10) bei gleichzeitigem Öffnen der Lamellenbremse (21) für das Hohlrad (16) des Turbinengetriebes geschlossen wird.

4. Verfahren nach Anspruch 3, **dadurch gekennzeichnet**, das beim Umschalten unterhalb der bestimmten Grenzdrehzahl die Drehrichtung der Turbine (20) umgekehrt wird.

## Claims

1. A method for braking with an automatic transmission (1) fitted with a hydrodynamic converter (4), with a turbine transmission (9) and a reverse gear transmission (10), whereas
1.1 the hydrodynamic converter is used as a flow brake, whereas
1.2 the power take-off (13) of the automatic transmission is coupled to the turbine shaft (19) of the hydrodynamic converter for braking at high output speeds
**characterised in that**
1.3 a hollow wheel (16) of the turbine transmission is braked or firmly braked when the lamella brake (11) of a hollow wheel (12) of the reverse gear transmission (10) is open and simultaneously
1.4 a planet spider (17) of the turbine transmission (9) is connected to the power take-off (13).

2. A method according to claim 1, **characterised in that** a reverse converter is used as a hydrodynamic converter.

3. A method for braking according to one of the preceding claims, **characterised in that** below a set limit rotation speed the lamella brake (11) is closed for the hollow wheel (12) of the reverse gear transmission (10) when the lamella brake (21) is open simultaneously for the hollow wheel (16) of the turbine transmission.

4. A method according to claim 3, **characterised in** the rotation direction of the turbine (20) is reversed during changeover below the set limit rotation speed.

## Revendications

1. Procédé de freinage pourvu d'une transmission automatique (1) avec convertisseur hydrodynamique (4), d'une transmission de turbine (9) et d'une transmission de marche arrière (10), dans lequel
1.1 le convertisseur hydrodynamique s'utilise comme frein hydraulique, dans lequel
1.2 pour freiner à des vitesses de sortie élevées, la prise de force (13) de la transmission automatique est accouplée à l'arbre de turbine (19) du convertisseur hydrodynamique,
**caractérisé en ce que**
1.3 une roue creuse (16) de la transmission de turbine est freinée normalement ou brutalement en cas d'ouverture d'un frein à lamelle (11) d'une roue creuse (12) de la transmission de marche arrière (10), et simultanément
1.4 un porte-pignon (17) de la transmission de turbine (9) est solidaire de la prise de force (13).

2. Procédé selon la revendication 1, **caractérisé en ce qu'**un convertisseur inverse s'utilise comme convertisseur hydrodynamique.

3. Procédé de freinage selon l'une quelconque des revendications précédentes, **caractérisé en ce qu'**au-dessous d'une vitesse de rotation limite déterminée le frein à lamelle (11) pour la roue creuse (12) de la transmission de marche arrière (10) se ferme en cas d'ouverture simultanée du frein à lamelle (21) pour la roue creuse (16) de la transmission de turbine.

4. Procédé selon la revendication 3, **caractérisé en ce que** le sens de rotation de la turbine (20) est inversé en cas de passage au-dessous de la vitesse de rotation limite déterminée.
